# EUROPEAN PATENT APPLICATION

(11) **EP 4 024 313 A1**
(43) Date of publication of application: **06.07.2022**
(21) Application number: 19943279.0
(22) Date of filing: 29.08.2019
(51) Int. Cl.: G06Q 30/02

(54) **ADVERTISEMENT VIEWING INFORMATION OUTPUT METHOD, ADVERTISEMENT VIEWING INFORMATION OUTPUT PROGRAM, AND INFORMATION PROCESSING DEVICE**

(71) Applicant: FUJITSU LIMITED, Kawasaki-shi, Kanagawa 211-8588 (JP)
(72) Inventor: YAMANAKA, Ryosuke, Kawasaki-shi, Kanagawa 211-8588 (JP); HORINOUCHI, Shogo, Kawasaki-shi, Kanagawa 211-8588 (JP); MASUDA, Takuya, Kawasaki-shi, Kanagawa 211-8588 (JP); HANYA, Toshinori, Kawasaki-shi, Kanagawa 211-8588 (JP)
(74) Representative: Hoffmann Eitle
(86) International application number: PCT/JP2019/033945
(87) International publication number: WO 2021/038800

(57) **Abstract**

In order to output correct information that contributes advertisement effectiveness measurement, a server acquires a moving image imaged by a camera that images a region near an installed position of an advertisement, extracts a head region of each imaged person in each frame in the moving image, and estimates a line-of-sight direction (three-dimensional angle) of each person from the extracted head region. Furthermore, the server determines whether or not each person visually recognizes the advertisement on the basis of a relationship between a position of each person and the installed position of the advertisement and of the line-of-sight direction of each person. Then, the server performs advertisement viewing determination on the basis of the visual recognition determination results in the plurality of frames for each person determined as the same person in the plurality of frames, counts the number of people who have viewed the advertisement, and outputs the number to a user's terminal.

## Description

### FIELD

The present invention relates to an advertisement viewing information output method, an advertisement viewing information output program, and an information processing device.

### BACKGROUND

Typically, a technique for outputting a direction of a face from a head image using a learning model has been known (for example, refer to Non-Patent Document 1 or the like) Furthermore, a technique has been also known for tracking a person between frames of a moving image in order to achieve tracking of a person, using a monitoring camera or the like (for example, refer to Non-Patent Document 2, Patent Document 1, or the like).

### CITATION LIST

### PATENT DOCUMENT

Patent Document 1: Japanese Laid-open Patent Publication No. 2017-151582

### NON-PATENT DOCUMENT

Non-Patent Document 1: Nataniel Ruiz, Eunji Chong, James M. Rehg, "Fine-Grained Head Pose Estimation Without Keypoints"[online], April 13, 2018, arXiv.org, [accessed August 20, 2019], Internet (URL: https://arxiv.org/pdf/1710.00925.pdf)
Non-Patent Document 2: Michael Thoreau, Navinda Kottege, "Improving Online Multiple Object tracking with Deep Metric Learning"[online], June 20, 2018, arXiv.org, [accessed August 20, 2019], Internet (URL: https://arxiv.org/pdf/1806.07592.pdf)

### SUMMARY

### [TECHNICAL PROBLEM]

For example, it is considered that it can be estimated whether or not a person in a frame faces a direction of an advertisement by extracting a head of the person from one frame acquired from a monitoring camera and using a relationship between a direction of a face estimated from the head and an installed position of the advertisement. Furthermore, it is considered that it is possible to obtain the number of people who face the direction of the advertisement within a predetermined time and a time period in which the person faces the direction of the advertisement by adding the estimation results in the plurality of frames obtained within a predetermined time period.

However, by only simply adding the estimation results in the plurality of frames, there is a possibility that the number of people and a time period in a case where it is not possible to assume that the advertisement is viewed (for example, a case where person faces direction of advertisement for only a moment or the like) are counted.

In one aspect, an object of the present invention is to provide an advertisement viewing information output method, an advertisement viewing information output program, and an information processing device that can output correct information that contributes to advertisement effectiveness measurement from video information obtained from a camera.

### [SOLUTION TO PROBLEM]

In one aspect, an advertisement viewing information output method is an advertisement viewing information output method for causing a computer to execute processing including acquiring video information imaged by a camera that images a region near an installed position of an advertisement, extracting a head region of each imaged person in each frame in the video information, estimating a line-of-sight direction of each person on the basis of the extracted head region, specifying whether or not the advertisement is included in a field of view of each person on the basis of a relationship between a position of each person and the installed position of the advertisement and of the line-of-sight direction of each person, determining whether or not the advertisement is viewed on the basis of the specified result in each of a plurality of frames for each person determined as a same person in the plurality of frames, generating advertisement viewing information regarding the number of advertisement viewers on the basis of a determination result of the determining processing, and outputting the advertisement viewing information.

### [ADVANTAGEOUS EFFECTS OF INVENTION]

Correct information that contributes to advertisement effectiveness measurement can be output from video information obtained from a camera.

### BRIEF DESCRIPTION OF DRAWINGS

FIG. 1 is a diagram schematically illustrating a configuration of an advertisement effectiveness measurement system according to a first embodiment.
FIG. 2 is a diagram schematically illustrating arrangement of an advertisement and a camera and an imaging range of the camera.
FIG. 3A is a diagram illustrating a hardware configuration of a server, and FIG. 3B is a diagram illustrating a hardware configuration of a user's terminal.
FIG. 4 is a diagram illustrating a functional block diagram of the server.
FIGs. 5A to 5D are diagrams for explaining visual recognition determination of each person in a frame.
FIGs. 6A to 6D are diagrams for explaining person tracking (tracking).
FIG. 7 is a diagram illustrating an example of a visual recognition determination result table.
FIG. 8 is a diagram illustrating an example of a viewing determination result table.
FIG. 9 is a flowchart illustrating processing of an advertisement visual recognition determination unit according to the first embodiment.
FIG. 10 is a flowchart illustrating processing of an advertisement viewing determination unit according to the first embodiment.
FIG. 11 is a flowchart illustrating detailed processing of viewing determination processing in FIG. 10.
FIG. 12 is a flowchart illustrating processing of an output information generation unit.
FIG. 13 is a diagram illustrating an example of an output screen according to the first embodiment.
FIG. 14 is a flowchart illustrating a first modification of the viewing determination processing according to the first embodiment.
FIG. 15 is a flowchart illustrating a second modification of the viewing determination processing according to the first embodiment.
FIG. 16 is a diagram illustrating a first modification of an output according to the first embodiment.
FIG. 17 is a diagram illustrating another example of the first modification of the output according to the first embodiment.
FIG. 18 is a diagram illustrating a second modification of the output according to the first embodiment.
FIG. 19 is a flowchart illustrating processing of an advertisement visual recognition determination unit according to a modification considering an attribute of a person.
FIG. 20A is a diagram illustrating an example of a visual recognition determination result table according to the modification considering the attribute of the person, and FIG. 20B is a diagram illustrating an example of a viewing determination result table according to the modification considering the attribute of the person.
FIGs. 21A and 21B are diagrams illustrating an example of an output screen according to the modification considering the attribute of the person.
FIG. 22 is a flowchart illustrating processing of an advertisement viewing determination unit according to a second embodiment.
FIG. 23 is a flowchart illustrating detailed processing of viewing determination processing (step S342 in FIG. 22) according to the second embodiment.
FIG. 24 is a diagram illustrating a viewing determination result table according to the second embodiment.
FIG. 25 is a flowchart illustrating processing of an output information generation unit according to the second embodiment.
FIG. 26 is a diagram illustrating an example of an output screen according to the second embodiment.
FIG. 27 is a diagram illustrating a first modification of an output of the second embodiment.
FIG. 28A is a diagram illustrating a viewing determination result table according to a modification considering an attribute of a person, and FIG. 28B is a diagram illustrating an example of an output screen.
FIG. 29 is a diagram illustrating a modification of an advertisement effectiveness measurement system.

### DESCRIPTION OF EMBODIMENTS

### [First Embodiment]

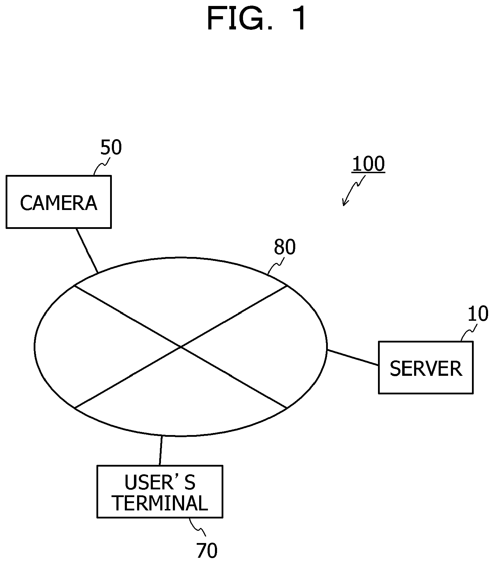

Hereinafter, a first embodiment will be described in detail with reference to FIGs. 1 to 13.

FIG. 1 schematically illustrates a configuration of an advertisement effectiveness measurement system 100 according to the first embodiment. The advertisement effectiveness measurement system 100 according to the first embodiment is a system that automatically determines how much a passer views an advertisement (any format may be used, such as paper medium or digital signage) installed in town, station, or the like and outputs the result.

As illustrated in FIG. 1, the advertisement effectiveness measurement system 100 includes a camera 50, a server 10 as an information processing device, and a user's terminal 70. The camera 50, the server 10, and the user's terminal 70 are connected to a network 80 such as the Internet.

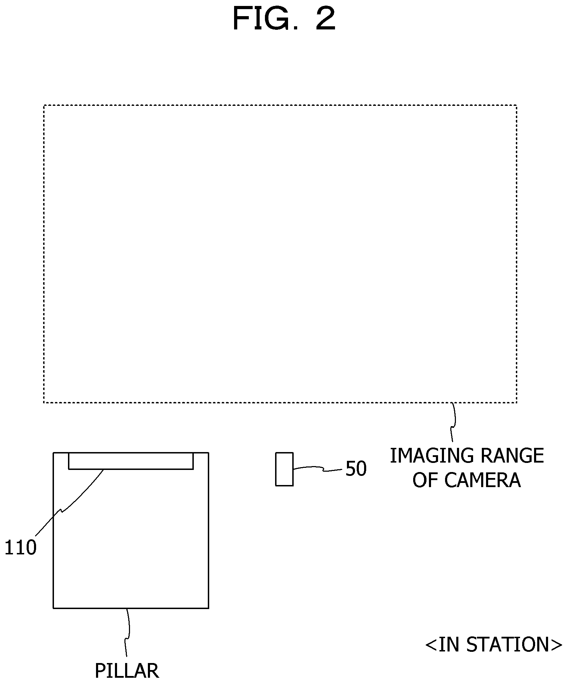

Here, the camera 50 is, for example, a camera (monitoring camera) installed in a station, and it is assumed that the camera 50 be installed near an advertisement 110 provided on a pillar in the station, as illustrated in FIG. 2. Note that it is sufficient that an installed position of a camera be a place where a region in which the advertisement can be viewed can be imaged. For example, the camera 50 may be installed as facing the advertisement 110. It is assumed that an imaging range (angle of view) of the camera 50 be, for example, a range including a region near the advertisement 110 as indicated by a broken line frame in FIG. 2.

The server 10 acquires video information (moving image) imaged by the camera 50, specifies a person who is facing the advertisement, and specifies a person who views the advertisement 110. Furthermore, the server 10 generates information regarding the number of people who view the advertisement 110 and outputs the information to the user's terminal 70. Note that, in the first embodiment, a case where a person is facing the advertisement (direction of head is facing advertisement) is expressed as "visually recognizing". Note that the direction of the head is represented by an angle difference with respect to a reference direction. For example, in the first embodiment, the reference direction is a direction when the face is straightly oriented toward a lens of the camera without twisting the neck or moving the head upward or downward. In this case, when the face faces the camera without moving the neck, three-dimensional angles (pitch, roll, and yaw) indicating the direction of the head are zero.

In this way, the direction of the face can be estimated on the basis of the direction of the head, and in addition, a line-of-sight direction can be estimated from the direction of the face. Therefore, in the first embodiment, it is possible to determine whether or not a person visually recognizes the advertisement from the direction of the head and the installed position of the advertisement. Therefore, in the first embodiment, it is assumed that the fact such that a direction of a head at a certain point of time is facing an installed position of an advertisement mean that the person "visually recognizes" the advertisement. Estimating the direction of the head in this way corresponds to estimating the line-of-sight direction. In a case where the person "visually recognizes" the advertisement, this means that there is a high possibility that the advertisement is included in the field of view of the person. Furthermore, in the first embodiment, in a case where a state where the person "visually recognizes" the advertisement continues for a time period equal to or longer than a certain time period (equal to or longer than viewing minimum time to be described later), it is assumed that the person have "viewed" the advertisement. In a case where the person has "viewed" the advertisement, it is assumed that this mean that a possibility that content of the advertisement can be confirmed is high, which is, the person has viewed the advertisement.

The user's terminal 70 is, for example, a terminal such as a personal computer (PC) used by a business operator that provides a posting space (advertisement space) of the advertisement 110 or an advertiser of the advertisement 110. The user's terminal 70 requests the server 10 to output information in response to an input from a user, receives the information output from the server 10, and displays the information or the like.

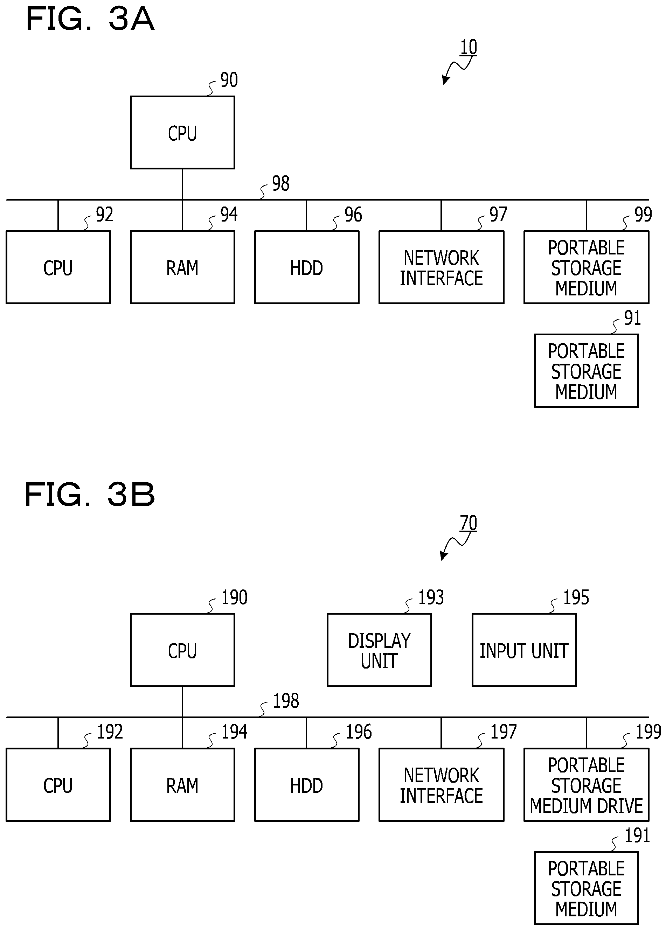

FIG. 3B schematically illustrates a hardware configuration of the user's terminal 70. As illustrated in FIG. 3B, the user's terminal 70 includes a central processing unit (CPU) 190, a read only memory (ROM) 192, a random access memory (RAM) 194, a storage unit (here, hard disk drive (HDD)) 196, a network interface 197, a display unit 193, an input unit 195, a portable storage medium drive 199 that can read programs, data, or the like from a portable storage medium 191, or the like. The display unit 193 includes a liquid crystal display or the like, and the input unit 195 includes a keyboard, a mouse, a touch panel, or the like. Each of these components of the user's terminal 70 is connected to a bus 198.

### (About Server 10)

Hereinafter, details of the server 10 will be described.

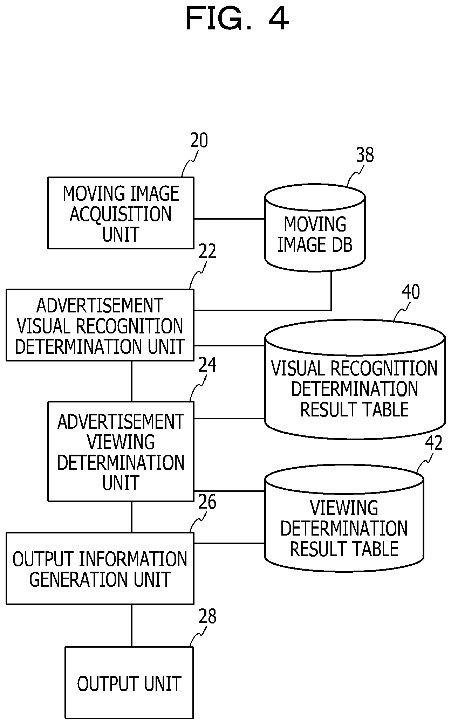

FIG. 3A schematically illustrates a hardware configuration of the server 10. As illustrated in FIG. 3A, the server 10 includes a CPU 90, a ROM 92, a RAM 94, a storage unit (HDD) 96, a network interface 97, a portable storage medium drive 99, and the like. Each of these components of the server 10 is connected to a bus 98. In the server 10, the CPU 90 executes a program (including advertisement viewing information output program) stored in the ROM 92 or the HDD 96 or a program (including advertisement viewing information output program) read from a portable storage medium 91 by the portable storage medium drive 99 so as to implement a function of each unit illustrated in FIG. 4. Note that FIG. 4 illustrates a visual recognition determination result table 40 and a viewing determination result table 42 stored in the HDD 96 of the server 10 or the like. Note that the function of each unit in FIG. 4 may be implemented by, for example, an integrated circuit such as an application specific integrated circuit (ASIC) or a field programmable gate array (FPGA).

FIG. 4 illustrates a functional block diagram of the server 10. As illustrated in FIG. 4, in the server 10, the CPU 90 executes the program so as to implement functions as a moving image acquisition unit 20 as an acquisition unit, an advertisement visual recognition determination unit 22, an advertisement viewing determination unit 24 as a determination unit, an output information generation unit 26 as a generation unit, and an output unit 28 as an output processing unit. Note that the CPU 90 functions as the moving image acquisition unit 20, the advertisement visual recognition determination unit 22, the advertisement viewing determination unit 24, and the output information generation unit 26. The network interface 197 or the display unit 193 functions as the output unit 28.

The moving image acquisition unit 20 acquires a moving image imaged by the camera 50 for each predetermined time period and stores the moving image in a moving image DB 38.

The advertisement visual recognition determination unit 22 executes processing for acquiring a necessary moving image from the moving image stored in the moving image DB 38 on the basis of an instruction from the user's terminal 70 and for determining whether or not each person imaged in the acquired moving image has visually recognized the advertisement. For example, a moving image in a time band specified by the user or a moving image having a predetermined time width is acquired. The advertisement visual recognition determination unit 22 stores the determination result in the visual recognition determination result table 40.

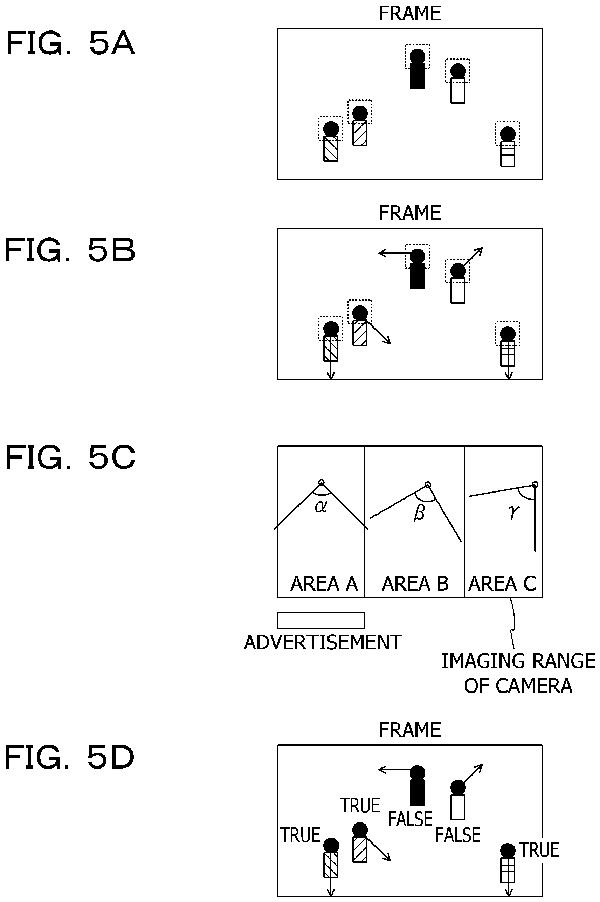

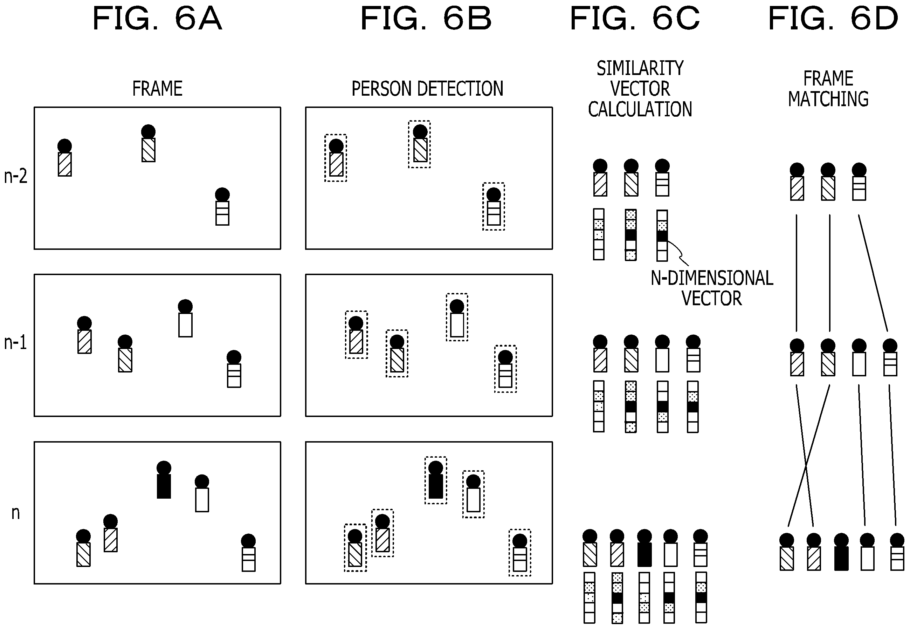

FIGs. 5 and 6 illustrate an outline of processing by the advertisement visual recognition determination unit 22. The advertisement visual recognition determination unit 22 detects a person in each frame cut from a moving image and extracts a head region of each person as indicated by a broken line frame in FIG. 5A. Then, from an image of the head region of each person, three-dimensional rotation angles (pitch, roll, and yaw) are estimated as the direction of the head with respect to the reference direction. Note that, in the following, this rotation angle is referred to as a "three-dimensional angle". As described above, the line-of-sight direction can be estimated on the basis of the three-dimensional angle indicating the direction of the head. In FIG. 5B, the three-dimensional angle is indicated by an arrow. The estimation of this three-dimensional angle is referred to as three-dimensional head pose estimation, head pose estimation, or the like, and a technique disclosed in Non-Patent Document 1 described above can be adopted. For example, the three-dimensional head pose technique prepares a learning model, in advance, that outputs the direction of the head with respect to the reference direction using the image of the head region as an input. Then, at the time of head pose estimation, the three-dimensional angle indicating the direction of the head is obtained by inputting the image of the head region of the person to be estimated in the learning model.

Next, processing for determining whether or not a line-of-sight direction estimated from the three-dimensional angle of the head faces an advertisement will be described. For example, an administrator of the system according to the present embodiment sets a plurality of (for example, three) areas A, B, and C with respect to an imaging region of the camera 50, for example, as illustrated in FIG. 5C. Then, the administrator sets angle ranges a, β, and γ in which there is a high possibility that people who exist in the respective areas A to C visually recognize the advertisement.

Then, for example, in a case where a person exists in the area A, the advertisement visual recognition determination unit 22 determines that the person visually recognizes the advertisement if the direction in which the person is facing (three-dimensional angle) is within the angle range α. Specifically, for each of the pitch, roll, and yaw, conditions α1 (pitch), α2 (roll), and α3 (yaw) of the angle range are set as the angle range α. If all of the pitch angle, the roll angle, and the yaw angle configuring the head direction (three-dimensional angle) are respectively within the specified angle ranges, the advertisement visual recognition determination unit 22 determines that the person visually recognizes the advertisement. Note that the advertisement visual recognition determination unit 22 may determine whether or not only the yaw angle among the pitch angle, the roll angle, and the yaw angle is within the angle range α specified in advance.

Furthermore, in a case where a person exists in the area B, the advertisement visual recognition determination unit 22 determines that the person visually recognizes the advertisement if the direction in which the person is facing (three-dimensional angle) is within the angle range β. In this case, as in a case of the area A, it may be determined whether or not the person visually recognizes the advertisement using all the three-dimensional angles (pitch, roll, and yaw), and it may be determined whether or not the person visually recognizes the advertisement using only the yaw angle.

Moreover, in a case where a person exists in the area C, the advertisement visual recognition determination unit 22 determines that the person visually recognizes the advertisement if the direction in which the person is facing (three-dimensional angle) is within the angle range γ. In this case, as in a case of the areas A and B, it may be determined whether or not the person visually recognizes the advertisement using all the three-dimensional angles (pitch, roll, and yaw), and it may be determined whether or not the person visually recognizes the advertisement using only the yaw angle.

In FIG. 5D, as a result of the above determination, a person who is determined to have a high possibility of visually recognizing the advertisement is indicated with "true", and a person who is not is indicated with "false". Note that the number of areas set within the imaging range may be a number other than three. Furthermore, each area does not have the same area, and the imaging range may be divided in the vertical direction and the horizontal direction. Furthermore, the area and the angle range may be manually set by a system administrator or may be automatically set by the server 10 on the basis of a relationship between the position of the advertisement and the imaging range input by the system administrator.

Furthermore, the advertisement visual recognition determination unit 22 performs person tracking (tracking) using a similarity of appearance of each person in each frame and specifies the same person in the frames. Hereinafter, tracking will be described with reference to FIGs. 6A to 6D. For example, it is assumed that frames n - 2, n - 1, and n be obtained in chronological order as illustrated in FIG. 6A. In this case, the advertisement visual recognition determination unit 22 uses an existing object detection model (for example, Faster R-CNN or single shot multibox detector (SSD)) to detect a person (refer to broken line frame in FIG. 6B). Furthermore, the advertisement visual recognition determination unit 22 uses a similarity learning model to obtain an N-dimensional vector from a whole body image of a person (refer to FIG. 6C), and specifies the same person between the frames by performing grouping in a time-series direction on the basis of the obtained N-dimensional vector (refer to FIG. 6D). Note that such a tracking technique is described in Non-Patent Document 2, Patent Document 1, or the like.

Then, the advertisement visual recognition determination unit 22 collects the information indicating "true" or "false" of each person obtained in FIG. 5D and the information regarding the same person in the frames obtained by tracking in the visual recognition determination result table 40.

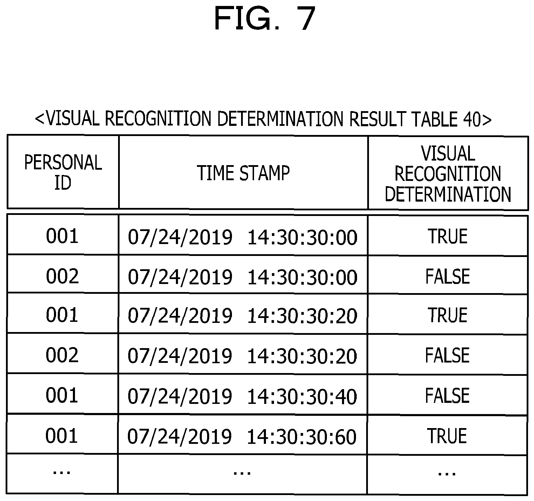

Here, the visual recognition determination result table 40 has a structure illustrated in FIG. 7. Specifically, in the visual recognition determination result table 40, a "personal ID", a "time stamp", and "visual recognition determination" are stored in association with each other. The "personal ID" is identification information assigned to each person. The same personal ID is assigned to a person who is specified as the same person in the plurality of frames. The "time stamp" is a time stamp attached to a frame cut from a moving image, and a time stamp attached to a frame used when visual recognition determination of each person is performed is stored. In the "visual recognition determination", the information of "true" and "false" obtained by the visual recognition determination in FIG. 5D is stored.

Returning to FIG. 4, the advertisement viewing determination unit 24 determines whether or not each person has viewed the advertisement with reference to the visual recognition determination result table 40. For example, it is assumed that a user be an advertiser who displays an advertisement using a digital signage for 30 seconds. In this case, there is a case where the user desires to know how many people have viewed the advertisement when the advertisement of the user has been displayed. In such a case, the user specifies the 30 seconds from the user's terminal 70 and requests the server 10 to output information regarding the number of viewers. Upon receiving the request, the advertisement visual recognition determination unit 22 executes viewing determination processing on each person with reference to data corresponding to the specified time period in the visual recognition determination result table 40. Note that, in a case where the server 10 stores a time schedule regarding displays of a plurality of advertisements, the user transmits information for identifying an advertisement to be analyzed to the server 10 so that the server 10 specifies a time band when the advertisement is displayed. Then, the server 10 generates advertisement viewing information for the specified time band.

Specifically, the advertisement viewing determination unit 24 extracts a visual recognition determination result of the same person (having common personal ID) within the time period specified from the visual recognition determination result table 40. In a case where the extracted visual recognition determination result has satisfied a specific condition, the advertisement viewing determination unit 24 determines that the person has viewed the advertisement. It is assumed that the "specific condition" in this case be a case where a total value of the time period when the person has visually recognized the advertisement is equal to or longer than a predetermined time period (viewing minimum time).

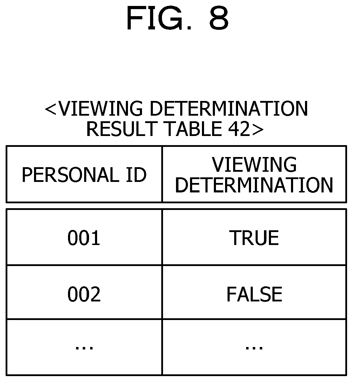

The advertisement viewing determination unit 24 stores a result of the viewing determination performed as described above in the viewing determination result table 42. Here, the viewing determination result table 42 has a structure illustrated in FIG. 8. Specifically, the viewing determination result table 42 stores a viewing determination result (true/false) in association with the personal ID.

The output information generation unit 26 generates advertisement viewing information corresponding to the instruction from the user's terminal 70 with reference to the viewing determination result table 42 and transfers the advertisement viewing information to the output unit 28. For example, as the advertisement viewing information, information regarding the number of advertisement viewers is generated. The advertisement viewing information is information that contributes to advertisement effectiveness measurement.

The output unit 28 transmits (output) the advertisement viewing information received from the output information generation unit 26 to the user's terminal 70.

### (About Processing of Server 10)

Hereinafter, processing of the server 10 will be described in detail with reference to the flowchart.

### (About Processing of Advertisement Visual Recognition Determination unit 22)

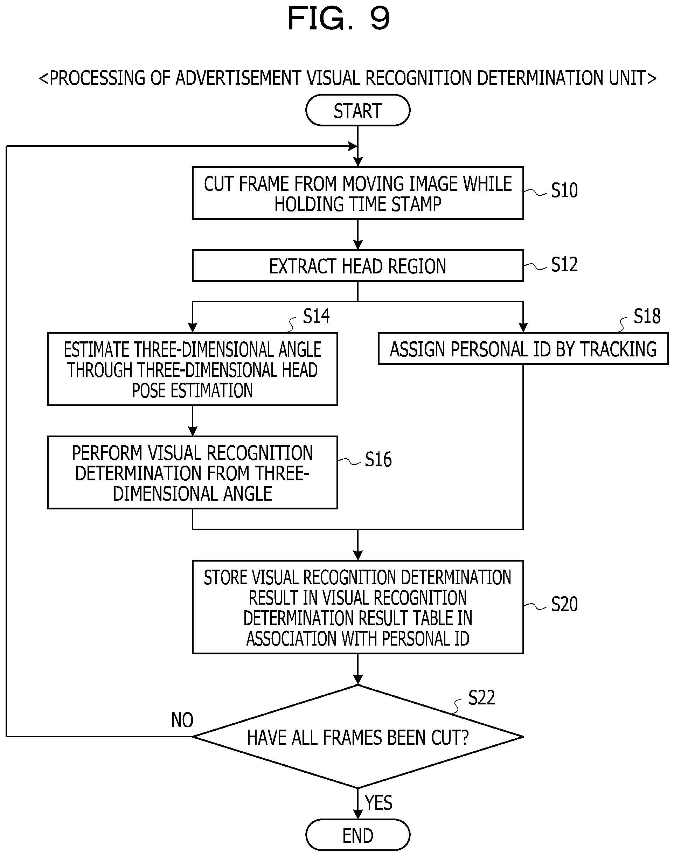

First, processing of the advertisement visual recognition determination unit 22 will be described with reference to the flowchart in FIG. 9. Note that, as a premise of the processing in FIG. 9, it is assumed that the moving image acquisition unit 20 acquire a moving image imaged by the camera 50 as needed and store the moving image in the moving image DB 38. Furthermore, it is assumed that the processing in FIG. 9 be started at a timing when a new moving image is stored in the moving image DB 38.

When the processing in FIG. 9 is started, first, in step S10, the advertisement visual recognition determination unit 22 cuts a single frame from the moving image newly stored in the moving image DB 38 while holding the time stamp.

Next, in step S12, the advertisement visual recognition determination unit 22 extracts a head region from the cut frame. Thereafter, the advertisement visual recognition determination unit 22 executes steps S14, S16, and S18 in parallel at the same time.

In step S14, the advertisement visual recognition determination unit 22 estimates a three-dimensional angle through the three-dimensional head pose estimation. For example, as described above, because the line-of-sight direction (arrow direction illustrated in FIG. 5B) can be estimated from the three-dimensional angle of the direction of the head, a three-dimensional angle of the direction of the head is estimated in step S14. Next, in step S16, the advertisement visual recognition determination unit 22 performs visual recognition determination from the three-dimensional angle. In this case, the advertisement visual recognition determination unit 22 confirms which area in FIG. 5A includes a position of each person and determines that the person visually recognizes the advertisement if the three-dimensional angle of each person is included in the angle range set to the area. Note that, in a case where the reference direction is not set as "the direction in a case where the person looks at the lens of the camera straight without twisting the neck or moving the face upward or downward", processing for converting the three-dimensional angle indicating the direction of the head into the three-dimensional angle corresponding to the line-of-sight direction is executed between steps S14 and S16.

On the other hand, in step S18, the advertisement visual recognition determination unit 22 assigns a personal ID by tracking. In a case where step S18 is executed first after starting the processing in FIG. 9, a new personal ID is assigned to each person in a frame. On the other hand, in a case where step S18 is executed for the second time or later after starting the processing in FIG. 9, the same personal ID is assigned to a person same as the person included in the previous frames, and a new personal ID is assigned to a new person.

When both of the processing in steps S14 and S16 and the processing in step S18 end, the procedure proceeds to step S20, and the advertisement visual recognition determination unit 22 stores the visual recognition determination result in the visual recognition determination result table 40 in association with the personal ID. In this case, if a time stamp of the cut frame is "2019/7/24 14:30:30:00", the advertisement visual recognition determination unit 22 stores the personal ID (result of S18) and the result of the visual recognition determination (result of S16) in association with the time stamp "2019/7/24 14:30:30:00" in the visual recognition determination result table 40 in FIG. 7.

Next, in step S22, the advertisement visual recognition determination unit 22 determines whether or not all frames have been cut from the moving image stored in the moving image DB 38. In a case where the determination in step S22 is denied, the procedure returns to step S10. On the other hand, in a case where the determination in step S22 is affirmed as a result of repeating steps S10 to S22, the entire processing in FIG. 9 ends. At the stage when the processing in FIG. 9 ends, viewing determination for all the frames of the moving image that has been newly stored in the moving image DB 38 ends, and this causes a state where the visual recognition determination result is stored in the visual recognition determination result table 40 in FIG. 7.

### (About Processing of Advertisement Viewing Determination Unit 24)

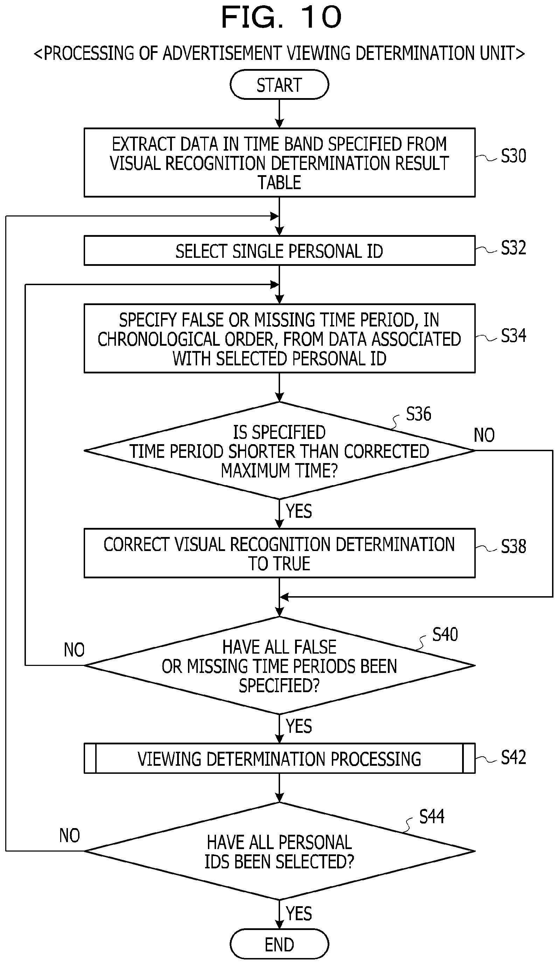

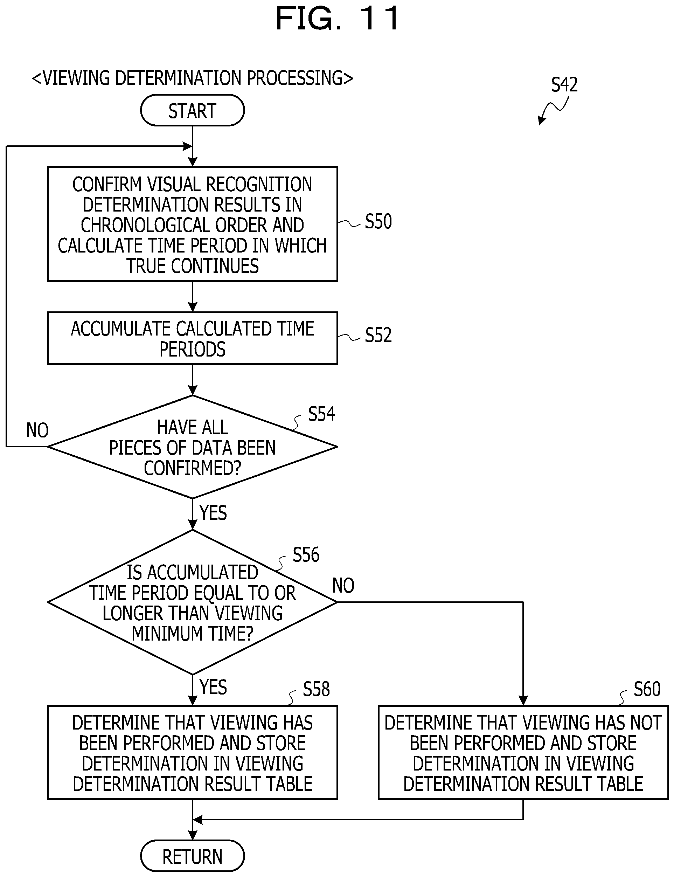

Next, processing of the advertisement viewing determination unit 24 will be described with reference to the flowcharts in FIGs. 10 and 11. Note that the processing in FIG. 10 is a timing when an output request of the advertisement viewing information obtained by specifying a certain time period is received from the user's terminal 70. Here, as an example, it is assumed that a user specify, for example, from 14:30:30 on July 24, 2019 to 14:31:00 on the same day via the user's terminal 70 and request to output information regarding the number of advertisement viewers.

In the processing in FIG. 10, first, in step S30, the advertisement viewing determination unit 24 extracts data in a time band specified from the visual recognition determination result table 40 (from 14:30:30 to 14:31:00 on July 24, 2019).

Next, in step S32, the advertisement viewing determination unit 24 selects a single personal ID. For example, the advertisement viewing determination unit 24 selects the smallest number (for example, "001") from among personal IDs included in the extracted data.

Next, in step S34, the advertisement viewing determination unit 24 specifies "false" or a missing time period in chronological order from data associated with the selected personal ID. Here, the missing time period means a time period in which a line-of-sight direction of a person having the selected personal ID cannot be specified. A case where the line-of-sight direction cannot be specified, for example, is a case where a person is not imaged or a case where a head region cannot be extracted.

Next, in step S36, the advertisement viewing determination unit 24 determines whether or not the specified time period is shorter than a corrected maximum time. Here, in a case where the time period when it is determined that the advertisement is visually recognized includes a small time period when the advertisement is not visually recognized (case where head is instantly shaken), it is not realistic to understand that the advertisement is not visually recognized only in the small time period. Furthermore, it is considered to be reasonable to assume that, in a case where the time period in which it is determined that the advertisement is visually recognized includes a short time period in which imaging is not performed (case of going out of imaging range), the advertisement is visually recognized in the short time period. Therefore, in the first embodiment, in a case where the specified time period is such a small time period (shorter than corrected maximum time), visual recognition determination in the time period is changed to "true". Note that it is assumed that the corrected maximum time can be set by the system administrator or the like and be, for example, 0.5 second or the like.

Therefore, in a case where the determination in step S36 is affirmed, the procedure proceeds to step S38, and the advertisement viewing determination unit 24 corrects the visual recognition determination to "true". For example, the advertisement viewing determination unit 24 assumes "false" or the missing time period as "true". Thereafter, the procedure proceeds to step S40. On the other hand, in a case where the determination in step S36 is denied, the advertisement viewing determination unit 24 proceeds the procedure to step S40 without correcting the visual recognition determination result in the specified time period.

Note that it can be said that, in the determination in step S36, it is determined whether or not the number of frames determined as "false" existing between the frames determined as "true" is less than a predetermined number, in the visual recognition determination result of the selected personal ID. Furthermore, it can be said that, in the determination in step S36, it is determined whether or not the number of missing frames among the frames determined as "true" is less than the predetermined number.

When the procedure proceeds to step S40, the advertisement viewing determination unit 24 determines whether or not all "false" or missing time periods have been specified. In a case where the determination in step S40 is denied, the procedure returns to step S34, and a next older "false" or missing time period is specified, and the processing and determination in subsequent steps S36 to S40 are executed. Then, at the time when the determination in step S40 is affirmed, the procedure proceeds to step S42.

When the procedure proceeds to step S42, the advertisement viewing determination unit 24 performs a subroutine of the viewing determination processing. Specifically, the advertisement viewing determination unit 24 executes processing according to the flowchart in FIG. 11.

In the processing in FIG. 11, first, the advertisement viewing determination unit 24 confirms visual recognition determination results in chronological order and calculates a time period in which "true" continues in step S50.

Next, in step S52, the advertisement viewing determination unit 24 accumulates the calculated time period.

Next, in step S54, the advertisement viewing determination unit 24 determines whether all pieces of data have been confirmed. In a case where the determination in step S54 is denied, the procedure returns to step S50, and the processing in steps S50 and S52 and the determination in step S54 are repeated. Then, at the time when the determination in step S54 is affirmed, the procedure proceeds to step S56. Note that, at the time when the determination in step S54 is affirmed, an accumulated value (integrated value) of a time period when the person having the selected personal ID has visually recognized the advertisement is obtained.

Next, in step S56, the advertisement viewing determination unit 24 determines whether or not the accumulated time period is equal to or longer than the viewing minimum time. Here, the viewing minimum time is a threshold used to determine whether or not viewing is performed from the accumulated time period. If the accumulated time period is equal to or longer than the viewing minimum time, it is determined that viewing has been performed. Note that the viewing minimum time can be determined by the system administrator in advance, and for example, can be 0.6 second or the like. In a case where the determination in step S56 is affirmed, the procedure proceeds to step S58, and the advertisement viewing determination unit 24 determines that the person having the selected personal ID has viewed the advertisement and stores the determination in the viewing determination result table 42.

On the other hand, in a case where the determination in step S56 is denied, the procedure proceeds to step S60, and the advertisement viewing determination unit 24 determines that the person having the selected personal ID does not view the advertisement and stores the determination in the viewing determination result table 42. Thereafter, the entire processing in FIG. 11 ends, and the procedure proceeds to step S44 in FIG. 10.

When the procedure proceeds to step S44, the advertisement viewing determination unit 24 determines whether or not all the personal IDs have been selected. In a case where the determination in step S44 is denied, the procedure proceeds to step S22. Then, at the time when the processing related to all the personal IDs included in the extracted data ends, the entire processing in FIG. 10 ends.

As described above, at the time when the entire processing in FIG. 10 ends, who has been viewing the advertisement and who has not been viewing the advertisement in the specified time band are stored in the viewing determination result table 42 (FIG. 8).

### (About Processing of Output Information Generation Unit 26)

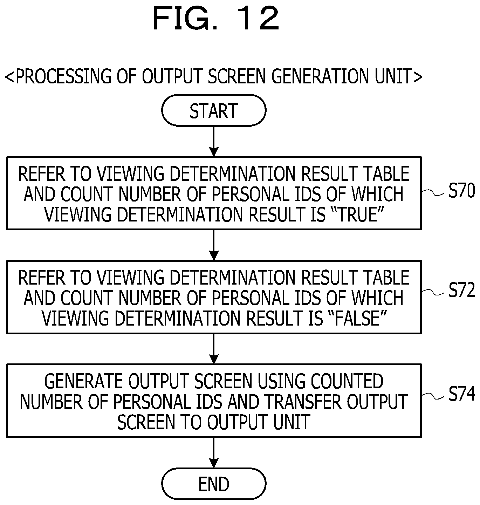

Next, processing of the output information generation unit 26 will be described with reference to the flowchart in FIG. 12.

When the flowchart in FIG. 12 is started, first, in step S70, the output information generation unit 26 refers to the viewing determination result table 42 and counts the number of personal IDs of which the viewing determination result is "true".

Next, in step S72, the output information generation unit 26 refers to the viewing determination result table 42 and counts the number of personal IDs of which the viewing determination result is "false".

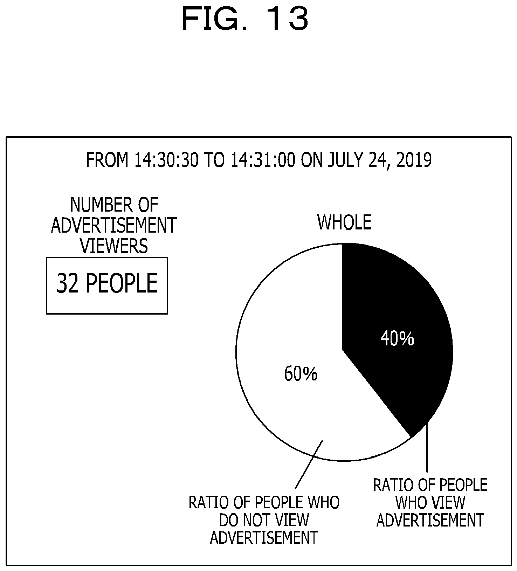

Then, in step S74, the output information generation unit 26 generates an output screen as illustrated in FIG. 13 using the number counted in step S70 and the number counted in step S72 and transfers the output screen to the output unit 28.

Upon receiving the output screen in FIG. 13 from the output information generation unit 26, the output unit 28 transmits the output screen to the user's terminal 70. As a result, a display unit 93 of the user's terminal 70 displays the output screen in FIG. 13. Therefore, the user can grasp the number of people who have viewed the advertisement of the user, and can grasp an advertisement viewing ratio (ratio of people who have viewed advertisement among people who have been passing near advertisement). Therefore, the user can determine whether or not to continue to post the advertisement, whether or not cost-effective of the advertisement is appropriate, and the like, from the output screen in FIG. 13. Note that the output screen in FIG. 13 is an example. For example, only one of the number of viewers of the advertisement and the viewing ratio may be displayed. Furthermore, information other than the number of viewers of the advertisement and the viewing ratio may be displayed.

As can be seen from the above description, in the first embodiment, the advertisement visual recognition determination unit 22 implements the functions as the extraction unit that extracts the head region of each imaged person in each frame of the moving image, the estimation unit that estimates the line-of-sight direction (three-dimensional angle) of each person from the extracted head region, and the specification unit that specifies whether or not the advertisement is included in the field of view of each person.

As described above, according to the first embodiment, the advertisement visual recognition determination unit 22 extracts the head region of each imaged person in each frame of the moving image (S12) and estimates the line-of-sight direction (three-dimensional angle) of each person from the extracted head region (S14). Furthermore, the advertisement visual recognition determination unit 22 determines whether or not each person visually recognizes the advertisement on the basis of the relationship between the position of each person and the installed position of the advertisement and the line-of-sight direction (three-dimensional angle) of each person (S16). Furthermore, the advertisement viewing determination unit 24 performs advertisement viewing determination on the basis of the visual recognition determination results in the plurality of frames for each person determined as the same person in the plurality of frames (each person to whom same personal ID is assigned) (S42). Moreover, the output information generation unit 26 counts the number of people who have viewed the advertisement (S70) and outputs the information regarding the number of advertisement viewers to the user's terminal 70 via the output unit 28 (S74). As a result, in the first embodiment, because whether or not the advertisement is viewed is determined on the basis of the visual recognition determination results in the plurality of frames for each same person, it is possible to prevent to determine a case where it is not possible to assume as viewing of the advertisement (for example, a case where person faces advertisement for only a moment or the like) as viewing. Therefore, according to the first embodiment, correct information that contributes to advertisement effectiveness measurement (advertisement viewing information such as the number of viewers or viewing ratio) can be output. In this case, a value of the advertisement space can be expressed as a numerical value. Therefore, this can be used to determine a price when a business operator that manages the advertisement space provides the advertisement space to an advertiser, to appeal the effectiveness in a case where the advertisement space is used, or the like.

Furthermore, in the first embodiment, in a case where the accumulated value of the time period when it is determined that the advertisement is visually recognized is equal to or longer than the viewing minimum time (S56: Yes), the advertisement viewing determination unit 24 determines that the advertisement has been viewed (S58). As a result, in a case where the person faces the direction of the advertisement only for a moment, it is possible not to determine that the advertisement is viewed.

Furthermore, in the first embodiment, the advertisement viewing determination unit 24 specifies "false" or the missing time period (S34), and in a case where the specified time period is shorter than the corrected maximum time (S36: Yes), the advertisement viewing determination unit 24 corrects the visual recognition determination result to "true" (S38). As a result, although it is determined as "false" in the visual recognition determination in consideration of characteristics of a person's movement, a case where the result should be assumed as "true" in practice is corrected. Therefore, it is possible to actually count the number of advertisement viewers and the viewing ratio.

Furthermore, in the first embodiment, the advertisement visual recognition determination unit 22 specifies the area in the frame in which the person is positioned, and in a case where the line-of-sight direction (three-dimensional angle) of the person faces the predetermined direction with respect to the specified area, the advertisement visual recognition determination unit 22 determines that the advertisement is visually recognized. As a result, even in a case where the camera 50 is separated from the advertisement 110, it can be easily determined whether or not the person visually recognizes the advertisement. Note that the camera 50 may be provided on an opposite side to the advertisement 110.

Furthermore, in the first embodiment, the advertisement visual recognition determination unit 22 extracts the head region from each frame and estimates the three-dimensional angle of the direction of the head from which the line-of-sight direction can be estimated. There is a technique for extracting a feature amount of a face from a face region extracted from an image. However, the feature amount of the face is information related to privacy. Therefore, in comparison with the technique for estimating the line-of-sight direction using the feature amount of the face, the first embodiment uses only the head region, and accordingly, it can be said that the first embodiment is a more privacy-conscious technique. Furthermore, in a case where a video of a camera provided independently from the installed position of the advertisement such as a monitoring camera is used, there are many passers whose faces are not imaged by the monitoring camera. Even in such a case, the first embodiment can estimate the line-of-sight direction, and is highly versatile than a technique that requires that the face is imaged as a condition.

### (First Modification of Viewing Determination Processing)

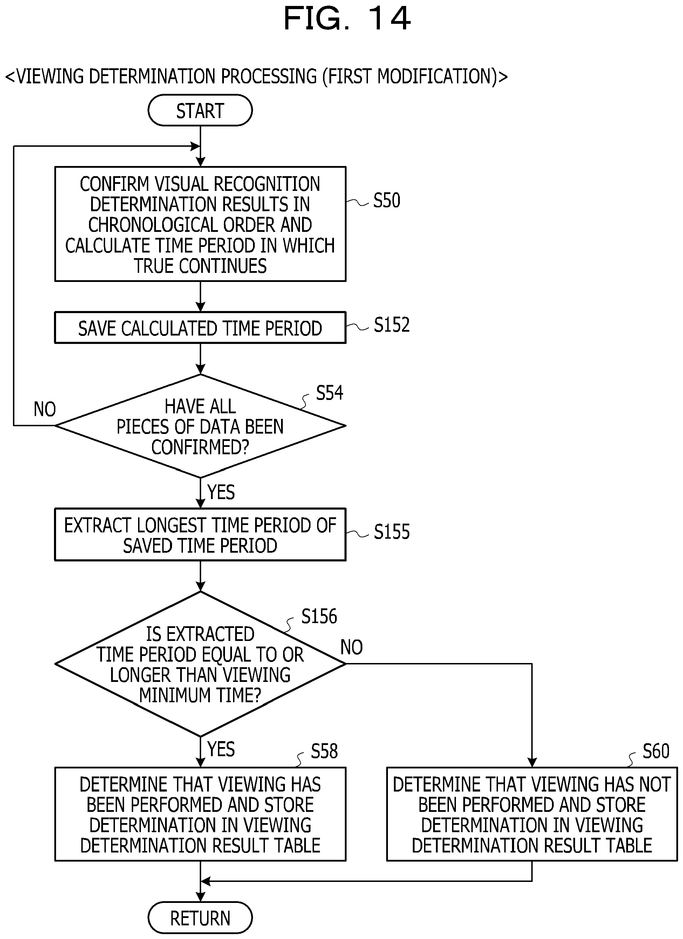

In the first embodiment described above, a case has been described, in the viewing determination processing in FIG. 11, in a case where the accumulated time period of the time period when the visual recognition determination result is "true" is equal to or longer than the viewing minimum time (S56: Yes), it is determined that the advertisement has viewed (S58). However, the present invention is not limited to this. For example, instead of the viewing determination processing in FIG. 11, processing as illustrated in FIG. 14 can be executed. In the processing in FIG. 14, the advertisement viewing determination unit 24 calculates a time period in which "true" continues in step S50, and saves the calculated time period in step S152. Then, when the confirmation of all the data is completed by repeating the processing in steps S50 and S152 (S54: Yes), the procedure proceeds to step S155, and the advertisement viewing determination unit 24 extracts the longest time period (maximum value) of the saved time period.

Next, in step S156, the advertisement viewing determination unit 24 determines whether or not the time period extracted in step S155 is equal to or longer than the viewing minimum time. In a case where the determination in step S156 is affirmed, the procedure proceeds to step S58, and the advertisement viewing determination unit 24 determines that the person having the selected personal ID has viewed the advertisement and stores the determination in the viewing determination result table 42. On the other hand, in a case where the determination in step S156 is denied, the procedure proceeds to step S60, and the advertisement viewing determination unit 24 determines that the person having the selected personal ID does not view the advertisement and stores the determination in the viewing determination result table 42. Thereafter, the entire processing in FIG. 14 ends.

As described above, in the processing in FIG. 14, viewing determination has been performed using the longest time period of the time period in which "true" continues in the visual recognition determination result of the selected personal ID. Even in this way, as in the first embodiment described above, the person who has viewed the advertisement can be accuracy specified.

### (Second Modification of Viewing Determination Processing)

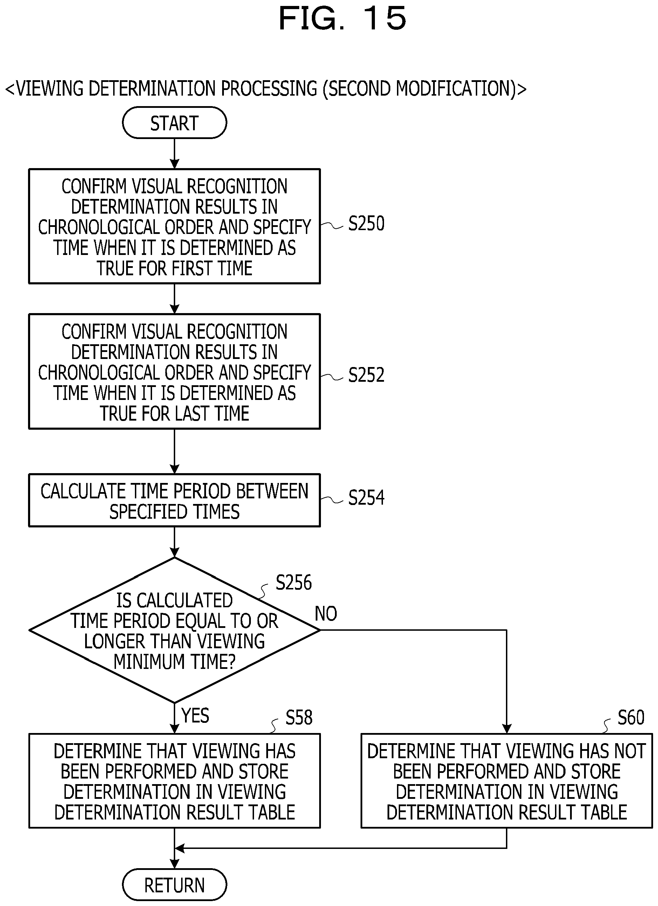

Furthermore, for example, instead of the viewing determination processing in FIG. 11, processing as illustrated in FIG. 15 can be executed. In the processing in FIG. 15, in step S250, the advertisement viewing determination unit 24 confirms the visual recognition determination results in chronological order and specifies a time when it is determined as "true" for the first time. Next, in step S252, the advertisement viewing determination unit 24 confirms the visual recognition determination results in chronological order and specifies a time when it is determined as "true" for the last time. Next, in step S254, the advertisement viewing determination unit 24 calculates a time period between the specified times. For example, the advertisement viewing determination unit 24 calculates a time period from a time when it is determined that the advertisement has been visually recognized for the first time to a time when it is determined that the advertisement has been visually recognized for the last time.

Next, in step S256, the advertisement viewing determination unit 24 determines whether or not the time period calculated in step S254 is equal to or longer than the viewing minimum time. In a case where the determination in step S256 is affirmed, the procedure proceeds to step S58, and the advertisement viewing determination unit 24 determines that the person having the selected personal ID has viewed the advertisement and stores the determination in the viewing determination result table 42. On the other hand, in a case where the determination in step S256 is denied, the procedure proceeds to step S60, and the advertisement viewing determination unit 24 determines that the person having the selected personal ID does not view the advertisement and stores the determination in the viewing determination result table 42. Thereafter, the entire processing in FIG. 15 ends.

As described above, in the processing in FIG. 15, viewing determination is made using the time period from the time when it is determined that the advertisement has been visually recognized for the first time to the time when it is determined that the advertisement has been visually recognized for the last time. Even in this way, as in the first embodiment described above and the first modification of the viewing determination processing described above, it is possible to accurately specify a person who has viewed an advertisement.

Note that, in a case where the processing in FIG. 15 is executed, the processing in steps S34, S36, S38, and S40 in FIG. 10 may be omitted.

### (First Modification of Output)

In the first embodiment described above, a case has been described where the user's terminal 70 specifies the time band when one advertisement is displayed and makes the server 10 execute the processing in FIG. 10. However, the present invention is not limited to this. For example, by using the user's terminal 70, it is possible to specify that one day is specified and the number of viewers of the advertisement per hour in the day is counted.

In this case, by extracting data of the specified one day from the visual recognition determination result table 40 and executing the processing in FIG. 10 using the data for one hour of the above data, a viewing determination result table 42 for one hour is obtained. Then, by repeatedly executing the processing in FIG. 10, for example, processing in FIG. 10 using data of next one hour and processing in FIG. 10 using data of subsequent one hour,..., the viewing determination result table 42 per hour can be obtained.

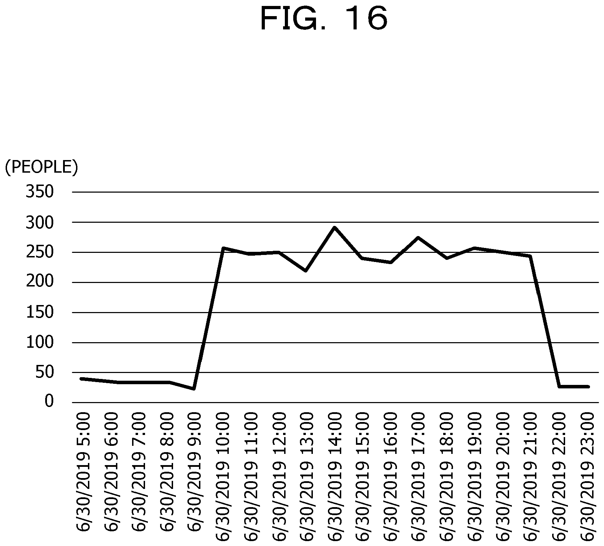

In this case, the output information generation unit 26 can generate the output screen as illustrated in FIG. 16, for example, by counting and graphing the number of personal IDs of which the viewing determination results are "true" for each hour. As a result, because the screen as illustrated in FIG. 16 is displayed on the user's terminal 70, it is possible for the advertiser or the like to grasp a time band in which the advertisement is viewed. Furthermore, a business operator that provides an advertisement space can properly adjust a price (rental fee) of the advertisement space according to the number of viewers per hour. For example, in FIG. 16, a rental fee in a time band in which the number of viewers is equal to or more than 150 can be increased, and a rental fee in a time band in which the number of viewers is less than 150 can be reduced.

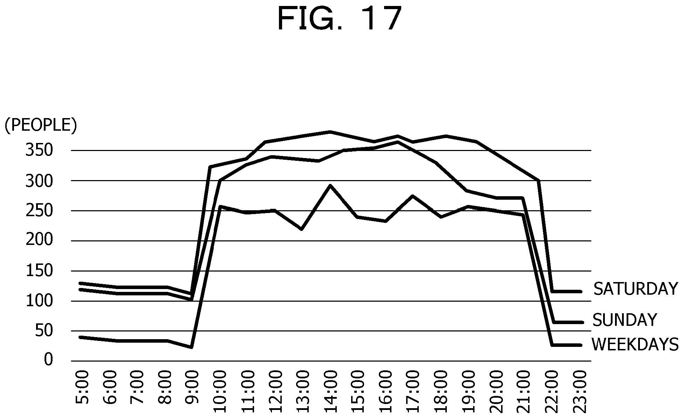

Note that, in the graph in FIG. 16, for example, an average value of the number of viewers in each time band for a predetermined period (one week, one month, or the like) may be displayed. Furthermore, the numbers of viewers in each time band of a plurality of days may be separately displayed. In this case, as illustrated in FIG. 17, an average value of the number of viewers in each time band on weekdays, an average value of the number of viewers in each time band on Saturday, and an average value of the number of viewers in each time band on Sunday can be separately displayed.

### (Second Modification of Output)

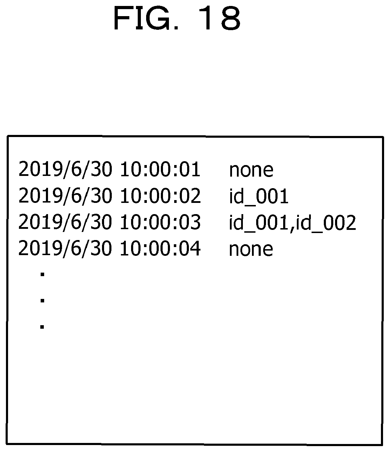

Note that, as illustrated in FIG. 18, the output information generation unit 26 generates a log in which personal IDs of people determined as viewing the advertisement at each time are listed. In a case where the log in FIG. 18 is output from the server 10 to the user's terminal 70, the user's terminal 70 may analyze the log and display the screen as in FIGs. 13, 16, and 17 on the display unit 193 as an analysis result.

### (Modification Considering Attribute of Person)

Note that, in the first embodiment, when an attribute of each person (gender and age) is estimated at the time of visual recognition determination and advertisement viewing information is generated, the advertisement viewing information may be organized on the basis of the attribute of each person.

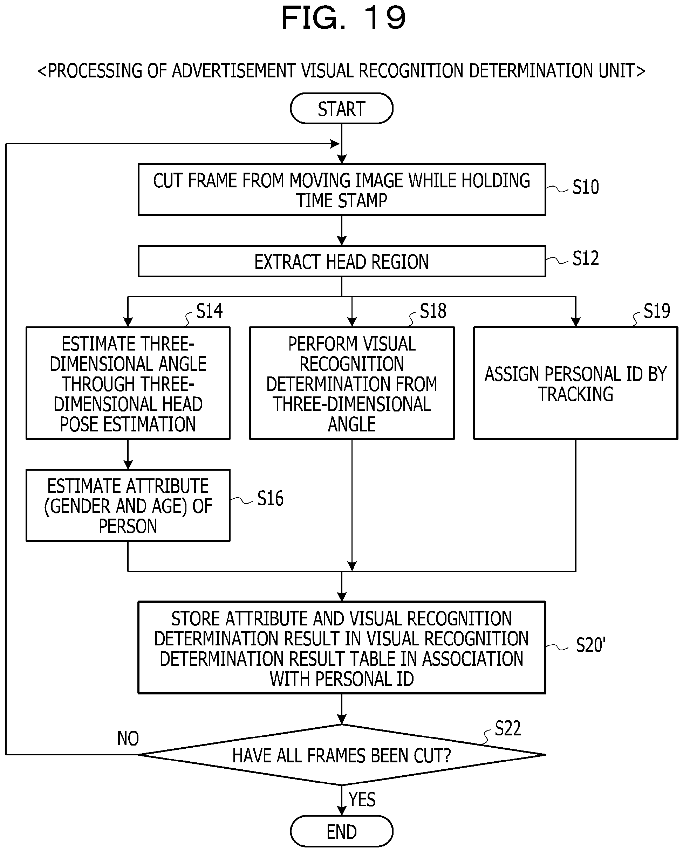

Specifically, the advertisement visual recognition determination unit 22 executes processing in FIG. 19 instead of the processing in FIG. 9. In the processing in FIG. 19, the advertisement visual recognition determination unit 22 executes the processing in step S19 in parallel to the processing in steps S14 and S16 and step S18. In step S19, the advertisement visual recognition determination unit 22 estimates the attribute of the person (gender and age) from a head region. Here, when the attribute of the person is estimated, artificial intelligence (AI) technology such as machine learning can be used. Then, when the parallel processing in steps S14 and S16, step S18, and step S19 ends, the advertisement visual recognition determination unit 22, in step S20', stores the attribute and the visual recognition determination result in the visual recognition determination result table 40 in association with a personal ID.

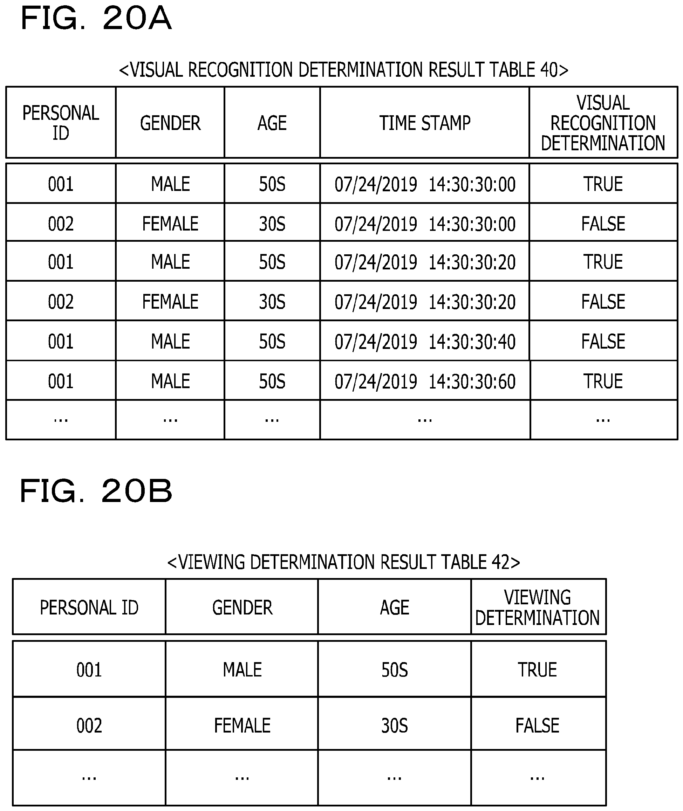

As the visual recognition determination result table 40 in this case, a table as illustrated in FIG. 20A can be used. Furthermore, the viewing determination result table 42 obtained as a result of the processing in FIG. 10 by the advertisement viewing determination unit 24 is a table as illustrated in FIG. 20B. In each table in FIGs. 20A and 20B, the gender and the age are associated with the personal ID.

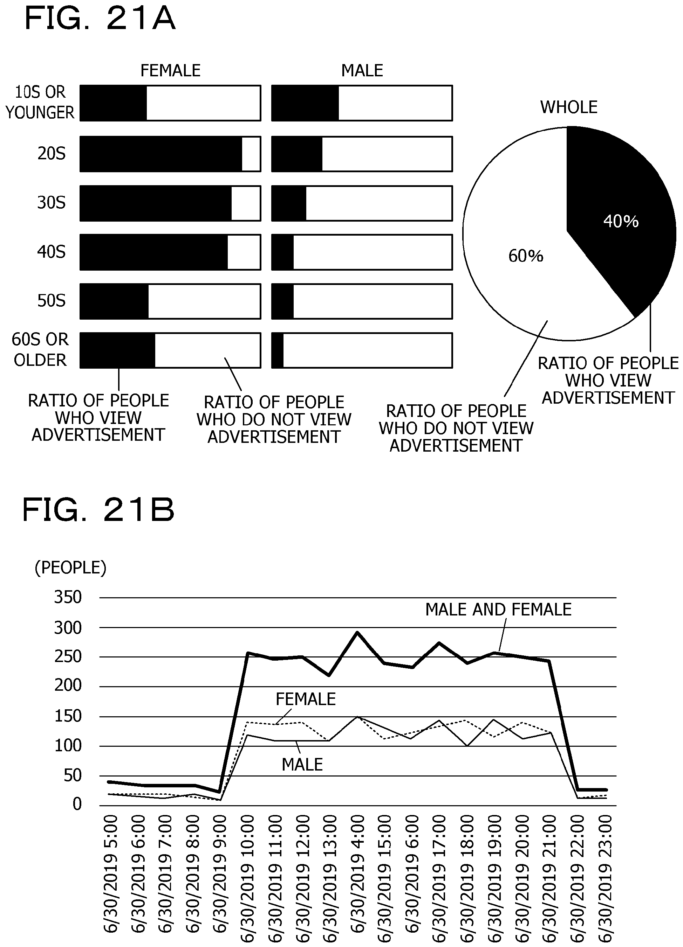

The output information generation unit 26 can generate a screen as illustrated in FIG. 21A by counting viewing determination results "true" and "false" for each gender and for each age from the viewing determination result table 42 in FIG. 20B. By displaying the screen as illustrated in FIG. 21A on the user's terminal 70, the advertiser or the like can accurately grasp age groups and genders of people who view the advertisement.

Furthermore, in a case where the viewing determination result table 42 in FIG. 20B is created for each hour, the output information generation unit 26 can generate an output screen as illustrated in FIG. 21B by counting the viewing determination results per hour for each gender and for both of men and women. By displaying the screen as illustrated in FIG. 21B on the user's terminal 70, the advertiser or the like can grasp which one of men or women more view the advertisement in which time band. As a result, the advertiser or the like can determine what type of advertisement should be posted in which time band or the like. Furthermore, the business operator that provides the advertisement space can adjust the price (rental fee) of the advertisement space according to the number of viewers and the attribute of the person who performs viewing.

### [Second Embodiment]

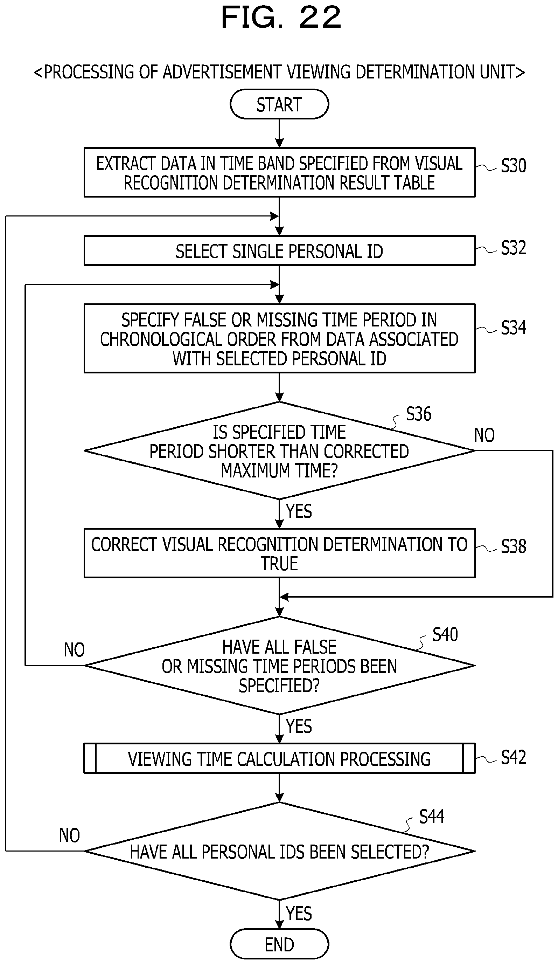

Next, a second embodiment will be described in detail with reference to FIGs. 22 to 26. A configuration of an advertisement effectiveness measurement system 100 according to the second embodiment is similar to that of the first embodiment. However, differences between the configurations of the first embodiment and the second embodiment include a point that the advertisement viewing determination unit 24 determines an advertisement viewing time length by each person and a point that the output information generation unit 26 generates an output screen regarding the advertisement viewing time length. Hereinafter, the points different from the first embodiment will be described in detail, and description of the points same as or similar to the first embodiment will be omitted or simplified.

### (About Processing of Advertisement Viewing Determination Unit 24)

FIG. 22 illustrates processing of an advertisement viewing determination unit 24 according to the second embodiment. Note that, as a premise of the processing in FIG. 22, it is assumed that the advertisement visual recognition determination unit 22 have executed the processing in FIG. 9 and the data have been stored in the visual recognition determination result table 40 as illustrated in FIG. 7.

In the processing in FIG. 22, instead of step S42 (viewing determination processing) in FIG. 10, viewing time calculation processing (S342) is executed, and other processing is similar to that in FIG. 10.

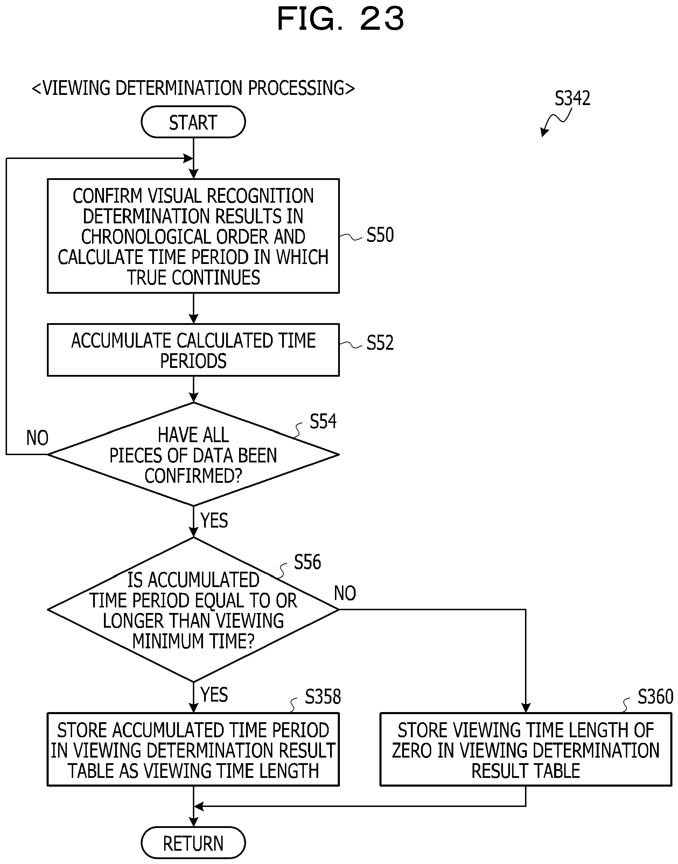

In step S342, processing according to the flowchart in FIG. 23 is executed. Here, in the processing in step S342, steps S50, S52, and S54 (point that advertisement viewing determination unit 24 accumulates time period in which visual recognition determination result "true" continues) and step S56 (point that it is determined whether or not accumulated time period is equal to or longer than viewing minimum time) are similar to those in the first embodiment (FIG. 11). On the other hand, a point is different from the first embodiment that, in a case where the determination in step S56 is affirmed, the procedure proceeds to step S358, and in a case where the determination is denied, the procedure proceeds to step S360.

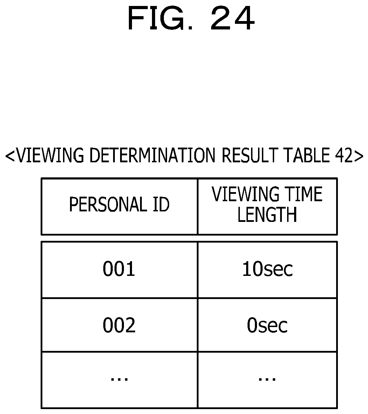

In a case where the procedure proceeds to step S358, the advertisement viewing determination unit 24 stores the accumulated time period in a viewing determination result table 42 as a viewing time length. Here, as illustrated in FIG. 24, the viewing determination result table 42 according to the second embodiment can store a "viewing time length" of each person in association with a "personal ID". For example, in a case where an accumulated time period of a person having a personal ID = 001 is 10 seconds, as illustrated in FIG. 24, "10 seconds" is stored in the field of the "viewing time length" in the viewing determination result table 42.

On the other hand, in a case where the procedure proceeds to step S360, the advertisement viewing determination unit 24 stores the viewing time length "0" in the viewing determination result table 42. For example, in a case where an accumulated time period of a person having a personal ID = 002 is 0.4 second, as illustrated in FIG. 24, "0 second" is stored in a field of the "viewing time length" in the viewing determination result table 42. Thereafter, the procedure returns to step S44 in FIG. 22.

As described above, by executing the processing (FIGs. 22 and 23) by the advertisement viewing determination unit 24, the viewing time length of each person in the time band specified by the user's terminal 70 (for example, time band in which advertisement is displayed) is stored in the viewing determination result table 42 (FIG. 24).

### (About Processing of Output Information Generation Unit 26)

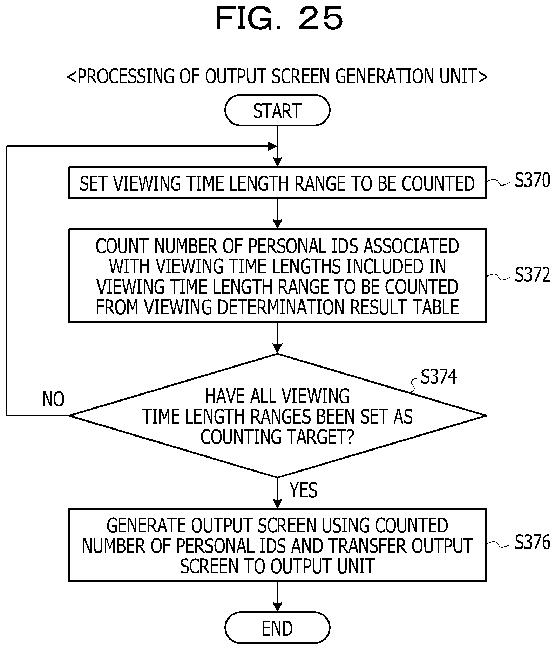

Next, processing of the output information generation unit 26 according to the second embodiment will be described with reference to the flowchart in FIG. 25.

In the processing in FIG. 25, first, in step S370, the output information generation unit 26 sets a viewing time length range to be counted. For example, it is assumed that, as the viewing time length range, "equal to or longer than 0.6 second and shorter than 2 seconds", "equal to or longer than 2 seconds and shorter than 7 seconds", and "equal to or longer than 7 seconds and shorter than 15 seconds",... can be selected. In this case, the output information generation unit 26 sets, for example, "equal to or longer than 0.6 second and shorter than 2 seconds" as the viewing time length range to be counted.

Next, in step S372, the output information generation unit 26 counts the number of personal IDs associated with the viewing time lengths included in the viewing time length range to be counted (equal to or longer than 0.6 second and shorter than 2 seconds) from the viewing determination result table 42 (FIG. 24).

Next, in step S374, the output information generation unit 26 determines whether or not all the viewing time length ranges have been set as the counting target. In a case where the determination in step S374 is denied, the procedure returns to step S370. Thereafter, the output information generation unit 26 repeats step S372 while changing the viewing time length range to be counted and proceeds the procedure to step S376 at the time when the determination in step S374 is affirmed.

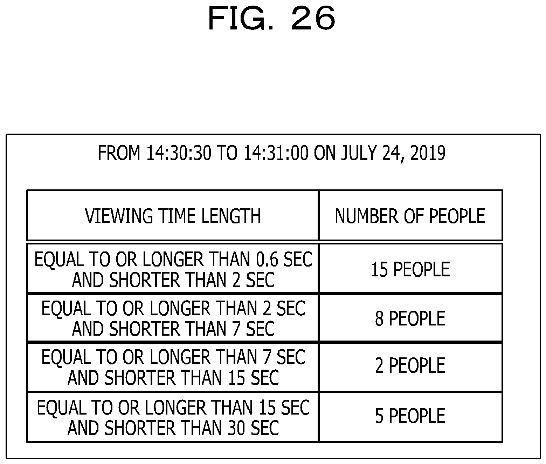

When the procedure proceeds to step S376, the output information generation unit 26 generates an output screen using the counted number of personal IDs and transfers the output screen to an output unit 28. The output information generation unit 26 generates, for example, an output screen as illustrated in FIG. 26. Because the output unit 28 outputs the output screen in FIG. 26 to the user's terminal 70, by confirming the output screen displayed on the user's terminal 70, it is possible to grasp how long a person who has been viewing the advertisement has continued to view the advertisement.

As described above, according to the second embodiment, the advertisement visual recognition determination unit 22 extracts the head region of each imaged person in each frame of the moving image (S12) and estimates the line-of-sight direction (three-dimensional angle) of each person from the extracted head region (S14). Furthermore, the advertisement visual recognition determination unit 22 determines whether or not each person visually recognizes the advertisement on the basis of the relationship between the position of each person and the installed position of the advertisement and the line-of-sight direction (three-dimensional angle) of each person (S16). Then, the advertisement viewing determination unit 24 specifies the advertisement viewing time length on the basis of the visual recognition determination results in the plurality of frames for each person determined as the same person in the plurality of frames (each person to whom same personal ID is assigned) (S358, S360). Moreover, the output information generation unit 26 counts the advertisement viewing time length of each person and outputs the information regarding the advertisement viewing time length to the user's terminal 70 via the output unit 28 (FIG. 25). As a result, in the second embodiment, because the viewing time length is specified from the visual recognition determination results in the plurality of frames for each same person, it is possible to prevent to determine a case where it is not possible to assume as viewing of the advertisement (for example, a case where person faces advertisement for only a moment or the like) as viewing. Therefore, according to the second embodiment, it is possible to output correct information that contributes to advertisement effectiveness measurement (information regarding viewing time length). In this case, a value of the advertisement space can be expressed as a numerical value. Therefore, this can be used to determine a price when a business operator that manages the advertisement space provides the advertisement space to an advertiser, to appeal the effectiveness in a case where the advertisement space is used, or the like.

Furthermore, in the second embodiment, in a case where the accumulated value of the time period when it is determined that the advertisement is visually recognized is equal to or longer than the viewing minimum time (S56: Yes), the advertisement viewing determination unit 24 sets the accumulated value as the viewing time length (S358), and in other cases, the viewing time length is set to zero (S360). As a result, in a case where the person faces the direction of the advertisement only for a moment, it is possible not to determine that the advertisement is viewed.

### (First Modification of Viewing Determination Processing)

Note that, in the second embodiment described above, a case has been described where, in the viewing determination processing in FIG. 23, the accumulated time period is set as the advertisement viewing time length (S358) in a case where the accumulated time period of the time period in which the visual recognition determination result is "true" is equal to or longer than the viewing minimum time (S56: Yes). However, the present invention is not limited to this. As in the modification (FIG. 14) of the first embodiment described above, in a case where the longest time period of the time period in which the visual recognition determination results "true" continue is equal to or longer than the viewing minimum time, the longest time period may be set as the advertisement viewing time length.

### (Second Modification of Viewing Determination Processing)

Furthermore, as in the second modification (FIG. 15) of the viewing determination processing of the first embodiment described above, in a case where the time period from the time when it is determined that the advertisement has been visually recognized for the first time to the time when it is determined that the advertisement has been visually recognized for the last time is equal to or longer than the viewing minimum time, the time period may be set as the advertisement viewing time length.

### (First Modification of Output)

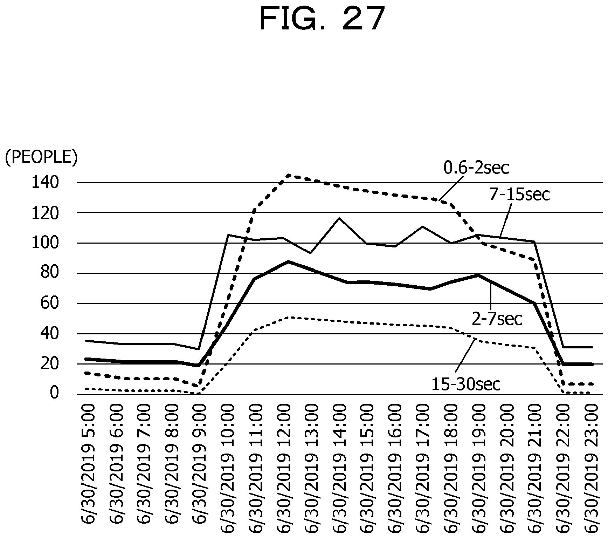

In the second embodiment described above, an example has been described where a table is output in which the viewing time lengths in the time bands when one advertisement is displayed are counted (refer to FIG. 26). However, the present invention is not limited to this. For example, viewing time lengths per hour in a certain day may be counted to generate a graph. In this case, for example, the graph as illustrated in FIG. 27 can be generated.

As a result, because a screen as illustrated in FIG. 27 is displayed on the user's terminal 70, it is possible for an advertiser or the like to grasp how many people are viewing the advertisement in each time band and how long the person who is viewing the advertisement views the advertisement. Furthermore, a business operator that provides an advertisement space can properly adjust a price (rental fee) of the advertisement space according to a tendency of the viewing time length for each time band.

Note that, in FIG. 27, the graph for counting the viewing determination result table 42 for one day is illustrated. However, for example, a graph may be created by counting the viewing determination result tables 42 for the plurality of days for each time band, or a graph may be created by counting data in each time band for each day of the week.

### (Second Modification of Output)

Note that the output information generation unit 26 may generate a log in which viewing time lengths of the respective people are listed. In a case where the log is output from the server 10 to the user's terminal 70, the user's terminal 70 may analyze the log and display the screen as in FIGs. 26 and 27 on the display unit 193 as an analysis result.

### (Modification Considering Attribute of Person)

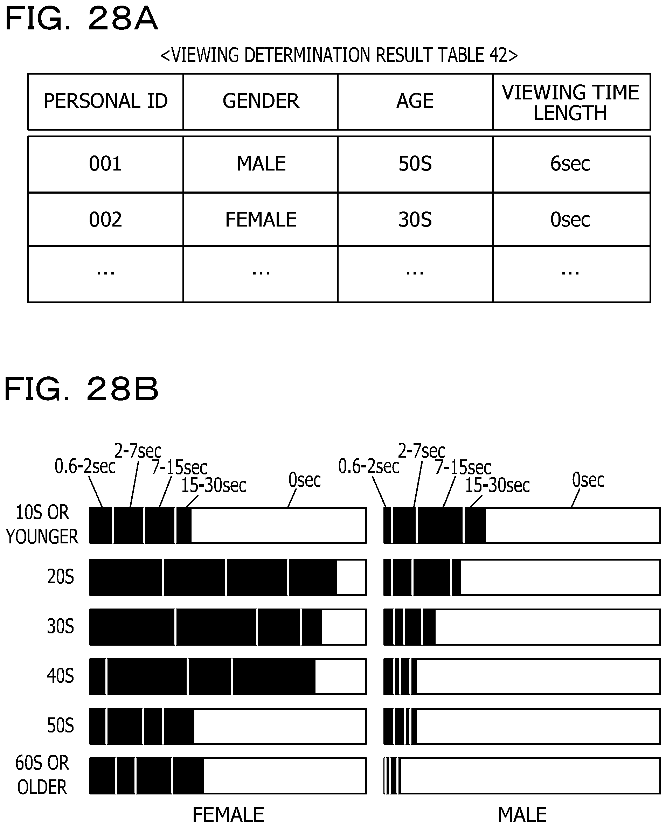

Note that, in the second embodiment, when an attribute of each person (gender and age) is estimated at the time of visual recognition determination and advertisement viewing information is generated, the advertisement viewing information may be organized on the basis of the attribute of each person. In this case, it is sufficient for the advertisement visual recognition determination unit 22 to execute the processing similar to that in FIG. 19. As a result, a table as illustrated in FIG. 28A can be obtained as the viewing determination result table 42.

In this case, by counting the viewing time lengths from the viewing determination result table 42 in FIG. 28A in consideration of gender and age, the output information generation unit 26 can generate an output screen as illustrated in FIG. 28B, for example. The output screen in FIG. 28B illustrates a result of counting the number of people for each viewing time length width for each gender and for each age group. By displaying the screen as illustrated in FIG. 28B on the user's terminal 70, the advertiser or the like can accurately grasp age groups and genders of people who view the advertisement, and it is possible to grasp how long a person in each age group views the advertisement.

Note that, the output screens indicated in the first and second embodiments described above and the modifications are examples. For example, various types of information obtained from the viewing determination result table 42 can be displayed on a screen in various forms.

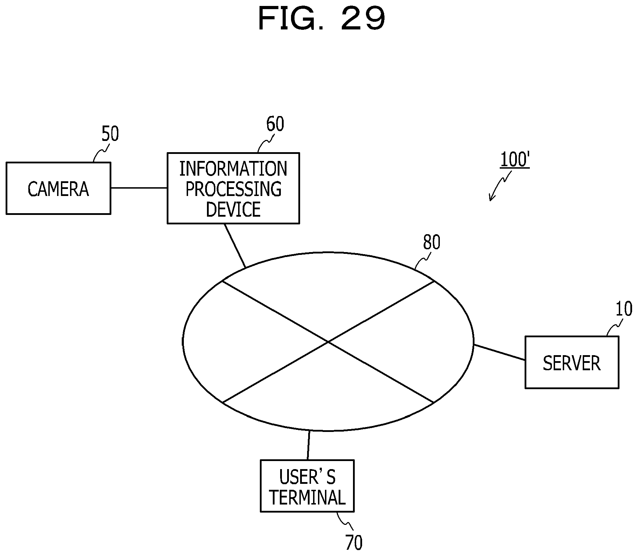

Note that, regarding the advertisement effectiveness measurement system 100 according to the first and second embodiments described above, a case has been described where the server 10 that has acquired the moving image imaged by the camera 50 executes various types of processing. However, the advertisement effectiveness measurement system 100 is not limited to this. For example, an advertisement effectiveness measurement system 100' as illustrated in FIG. 29 may be adopted. In the advertisement effectiveness measurement system 100' in FIG. 29, it is assumed that the camera 50 be connected (for example, wiredly connected) to an information processing device 60 such as an edge gateway. It is assumed that the information processing device 60 be provided near the camera 50 and have the functions of the server 10 described in the first embodiment (each function illustrated in FIG. 4). For example, the information processing device 60 receives the moving image from the camera 50 and executes the processing similar to that of the server 10 in the first and second embodiments. It is assumed that information (output screen) generated by the information processing device 60 be transmitted to the server 10 and appropriately transmitted to the user's terminal 70. Note that the information processing device 60 does not need to have all the functions in FIG. 4. For example, the output information generation unit 26 may be included in the server 10. In this case, it is assumed that the information processing device 60 output the information of the viewing determination result table 42 to the server 10, and the server 10 may generate the output screen on the basis of the viewing determination result table 42. By providing the information processing device 60 in this way, the camera 50 does not need to transmit the moving image to the server 10, and accordingly, a network load can be reduced.

Note that the processing functions described above may be implemented by a computer. In that case, a program is provided in which processing content of a function that a processing device should have is described. The program is executed on the computer, whereby the processing functions described above are implemented on the computer. The program in which the processing content is described may be recorded in a computerreadable storage medium (note that a carrier wave is excluded).

In a case of distributing the program, for example, the program is sold in a form of a portable storage medium such as a digital versatile disc (DVD) or a compact disc read only memory (CD-ROM) in which the program is recorded. Furthermore, it is also possible to store the program in a storage device of a server computer and transfer the program from the server computer to another computer via a network.

The computer that executes the program stores, for example, the program recorded in the portable storage medium or the program transferred from the server computer in a storage device of the computer. Then, the computer reads the program from the storage device of the computer and executes processing according to the program. Note that the computer may also read the program directly from the portable storage medium and execute processing according to the program. Furthermore, the computer may also sequentially execute processing according to the received program each time when the program is transferred from the server computer.

The embodiments described above are examples of a preferred embodiment. However, the present invention is not limited to this, and various modifications may be made without departing from the scope of the present invention.

### REFERENCE SIGNS LIST

10server (information processing device)
20moving image acquisition unit (acquisition unit)
22advertisement visual recognition determination unit (extraction unit, estimation unit, specification unit)
24advertisement viewing determination unit (determination unit)
26output information generation unit (generation unit)
28output unit (output processing unit)
50camera

## Claims

1. An advertisement viewing information output method for causing a computer to execute processing comprising:
acquiring video information imaged by a camera that images a region near an installed position of an advertisement;
extracting a head region of each imaged person in each frame in the video information;
estimating a line-of-sight direction of each person on the basis of the extracted head region;
specifying whether or not the advertisement is included in a field of view of each person on the basis of a relationship between a position of each person and the installed position of the advertisement and of the line-of-sight direction of each person;
determining whether or not the advertisement is viewed on the basis of the specified result in each of a plurality of frames for each person determined as a same person in the plurality of frames;
generating advertisement viewing information regarding the number of advertisement viewers on the basis of a determination result of the determining processing; and
outputting the advertisement viewing information.

2. An advertisement viewing information output method for causing a computer to execute processing comprising:
acquiring video information imaged by a camera that images a region near an installed position of an advertisement;
extracting a head region of each imaged person in each frame in the video information;
estimating a line-of-sight direction of each person on the basis of the extracted head region;
specifying whether or not the advertisement is included in a field of view of each person on the basis of a relationship between a position of each person and the installed position of the advertisement and of the line-of-sight direction of each person;
determining an advertisement viewing time length on the basis of the specified result in each of a plurality of frames for each person determined as a same person in the plurality of frames;
generating advertisement viewing information regarding the advertisement viewing time length on the basis of a determination result of the determining processing; and
outputting the advertisement viewing information.

3. The advertisement viewing information output method according to claim 1 or 2, wherein
the line-of-sight direction is estimated on the basis of a result of estimating a direction of a head with respect to a reference direction from the head region.

4. The advertisement viewing information output method according to any one of claims 1 to 3, wherein the determining processing specifies an accumulated value of a time period in which the advertisement is included in the field of view of the person, a maximum value of the time period in which the advertisement is included in the field of view of the person, or a time period between a time when the advertisement enters the field of view of the person for the first time and a time when the advertisement enters the field of view of the person for the last time of a time period in which the plurality of frames is imaged, on the basis of a result of the specifying processing and specifies that the person has viewed the advertisement in a case where the specified time period is equal to or longer than a threshold.

5. The advertisement viewing information output method according to any one of claims 1 to 4, wherein
in a case where frames, in which it is specified that the advertisement is not included in the field of view, less than a predetermined number exist between two frames in which it is specified that the advertisement has been included in the field of view of the person among the plurality of frames, the determining processing assumes that the advertisement is included in the field of view in the frames less than the predetermined number.

6. The advertisement viewing information output method according to any one of claims 1 to 5, wherein in a case where an area in the frame where each person is positioned is specified and a line-of-sight direction of each person faces a predetermined direction with respect to the specified area, the specifying processing specifies that the advertisement is included in the field of view.

7. The advertisement viewing information output method according to any one of claims 1 to 6, further comprising:
processing of estimating an attribute of each person imaged in each of the frames, wherein
the outputting processing organizes and outputs the advertisement viewing information on the basis of the attribute of each person.

8. An advertisement viewing information output program for causing a computer to execute processing comprising:
acquiring video information imaged by a camera that images a region near an installed position of an advertisement;
extracting a head region of each imaged person in each frame in the video information;
estimating a line-of-sight direction of each person on the basis of the extracted head region;
specifying whether or not the advertisement is included in a field of view of each person on the basis of a relationship between a position of each person and the installed position of the advertisement and of the line-of-sight direction of each person;
determining whether or not the advertisement is viewed on the basis of the specified result in each of a plurality of frames for each person determined as a same person in the plurality of frames;
generating advertisement viewing information regarding the number of advertisement viewers on the basis of a determination result of the determining processing; and
outputting the advertisement viewing information.

9. An advertisement viewing information output program for causing a computer to execute processing comprising:
acquiring video information imaged by a camera that images a region near an installed position of an advertisement;
extracting a head region of each imaged person in each frame in the video information;
estimating a line-of-sight direction of each person on the basis of the extracted head region;
specifying whether or not the advertisement is included in a field of view of each person on the basis of a relationship between a position of each person and the installed position of the advertisement and of the line-of-sight direction of each person;
determining an advertisement viewing time length on the basis of the specified result in each of a plurality of frames for each person determined as a same person in the plurality of frames;
generating advertisement viewing information regarding the advertisement viewing time length on the basis of a determination result of the determining processing; and
outputting the advertisement viewing information.

10. An information processing device comprising:
an acquisition unit configured to acquire video information imaged by a camera that images a region near an installed position of an advertisement;
an extraction unit configured to extract a head region of each imaged person in each frame in the video information;
an estimation unit configured to estimate a line-of-sight direction of each person on the basis of the extracted head region;
a specification unit configured to specify whether or not the advertisement is included in a field of view of each person on the basis of a relationship between a position of each person and the installed position of the advertisement and of the line-of-sight direction of each person;
a determination unit configured to determine whether or not the advertisement is viewed on the basis of a specification result of the specification unit in a plurality of frames for each person determined as a same person in the plurality of frames;
a generation unit configured to generate advertisement viewing information regarding the number of advertisement viewers on the basis of a determination result of the determination unit; and
an output processing unit configured to output the advertisement viewing information.

11. An information processing device comprising:
an acquisition unit configured to acquire video information imaged by a camera that images a region near an installed position of an advertisement;
an extraction unit configured to extract a head region of each imaged person in each frame in the video information;
an estimation unit configured to estimate a line-of-sight direction of each person on the basis of the extracted head region;
a specification unit configured to specify whether or not the advertisement is included in a field of view of each person on the basis of a relationship between a position of each person and the installed position of the advertisement and of the line-of-sight direction of each person;
a determination unit configured to determine whether or not the advertisement is viewed on the basis of a specification result of the specification unit in a plurality of frames for each person determined as a same person in the plurality of frames;
a generation unit configured to generate advertisement viewing information regarding the advertisement viewing time length on the basis of a determination result of the determination unit; and
an output processing unit configured to output the advertisement viewing information.

12. The information processing device according to claim 10 or 11,
wherein
the estimation unit estimates the line-of-sight direction on the basis of a result of estimating a direction of a head with respect to a reference direction from the head region.

13. The information processing device according to any one of claims 10 to 12, wherein the determination unit specifies an accumulated value of a time period in which the advertisement is included in the field of view of the person, a maximum value of the time period in which the advertisement is included in the field of view of the person, or a time period between a time when the advertisement enters the field of view of the person for the first time and a time when the advertisement enters the field of view of the person for the last time of a time period in which the plurality of frames is imaged, on the basis of a result of the specifying processing and specifies that the person has viewed the advertisement in a case where the specified time period is equal to or longer than a threshold.

14. The information processing device according to any one of claims 10 to 13, wherein
in a case where frames, in which it is specifies that the advertisement is not included in the field of view, less than a predetermined number exist between two frames in which it is specified that the advertisement has been included in the field of view of the person among the plurality of frames, the determination unit assumes that the advertisement is included in the field of view in the frames less than the predetermined number.

15. The information processing device according to any one of claims 10 to 14, wherein
in a case where an area in the frame where each person is positioned is specified and a line-of-sight direction of each person faces a predetermined direction with respect to the specified area, the specification unit specifies that the advertisement is included in the field of view.

16. The information processing device according to any one of claims 10 to 15, wherein
the estimation unit estimates an attribute of each person imaged in each of the frames, and
the output unit organizes and outputs the advertisement viewing information on the basis of the attribute of each person.
